# DEMANDE DE BREVET EUROPEEN

(11) **EP 1 672 317 A1**
(43) Date de publication de la demande: **21.06.2006**
(21) Numéro de dépôt: 05292718.3
(22) Date de dépôt: 16.12.2005
(51) Int. Cl.: G01C 21/20, G08G 1/005

(54) **Système et procédé de guidage d'un individu dans une zone prédéterminée**

(30) Priorité: 20.12.2004 FR 0413556
(71) Demandeur: FRANCE TELECOM, 75015 Paris (FR)
(72) Inventeur: Tran Xuan, Fabrice, 38320 Eybens (FR); Villain, Eric, 38400 Saint Martin d'Heres (FR); Prola, Alain, 38100 Grenoble (FR)
(74) Mandataire: Delumeau, François Guy

(57) **Abrégé**

Ce système de guidage d'un individu vers une destination située dans une zone prédéterminée comporte une borne fixe de guidage (10) comportant :
- des moyens (12) de lecture d'un code associé à une destination ;
- des moyens (14) de communication sans fil, comportant un mode de veille et un mode opérationnel à consommation électrique réduite pour :
   - envoyer une requête comportant le code associé à une destination et une indication de position de la borne vers un dispositif (20) de détermination d'itinéraire ; et à
   - recevoir une réponse comportant cet itinéraire; et
- des moyens de restitution de cet itinéraire à l'individu.

## Description

### Arrière-plan de l'invention

La présente invention se rapporte à un système et à un procédé de guidage d'un individu dans une zone prédéterminée.

L'invention peut préférentiellement, et de façon non limitative, être utilisée pour guider des individus dans un bâtiment, sur un ou plusieurs étages.

On notera tout d'abord que les techniques de guidage par satellite (GPS, ...) ne peuvent être utilisées à cet effet, en ce qu'elles ne permettent pas de distinguer les différents étages d'un immeuble. Elles requièrent en outre l'utilisation de terminaux relativement onéreux.

On connaît également la méthode de localisation et de guidage, proposée par la société EKAHAU et décrite dans le document publié sur Internet à l'adresse http://www.ekahau.com/products/positioningengine/.

Cette méthode de localisation repose principalement sur la mesure de puissance des signaux reçus, en provenance de l'individu ou de l'objet à guider, par des stations conformes à la norme Wi-Fi (IEEE 802.11 a/b/g), et sur le rapprochement de ces mesures avec des mesures de calibration effectuées préalablement, sur toute la zone couverte, typiquement lors de l'installation de ces stations.

Lorsque la zone à couvrir est importante, un tel système requiert pour être efficace l'installation d'un grand nombre de balises radio et devient donc onéreux.

En outre, cette installation nécessite une phase préliminaire de calibration fastidieuse, et en pratique inenvisageable pour l'installation d'un système de guidage dans une zone temporaire ou à topologie variable (hall d'exposition, musée, ...).

### Objet et résumé de l'invention

La présente invention vise donc à pallier les inconvénients en proposant un système et un procédé de guidage simple d'installation, facilement reconfigurable, à bas coût, et permettant de guider un individu dans un bâtiment comportant plusieurs étages.

A cet effet, et selon un premier aspect, l'invention concerne une borne fixe de guidage d'un individu dans une zone prédéterminée, cette borne fixe comportant une mémoire mémorisant une indication de position de cette borne fixe et :
- des moyens de lecture d'un code associé à une destination à laquelle souhaite se rendre un individu situé à proximité de cette borne ;
- des moyens de communication sans fil pour :
   - envoyer une requête comportant le code associé à une destination et l'indication de position de la borne, vers un dispositif de détermination d'itinéraire ; et à
   - recevoir une réponse comportant un itinéraire entre la borne et la destination associée au code précité ; et
   - des moyens de restitution de cet itinéraire à l'individu.

Dans ce document, le "code associé à une destination" peut soit contenir la destination proprement dite, soit tout type d'information permettant d'obtenir cette destination de façon directe ou indirecte.

Préférentiellement, les moyens de communication sans fil de la borne de guidage selon l'invention comportent un mode de veille et un mode opérationnel à consommation électrique réduite.

Conformément à l'invention, l'itinéraire restitué est un itinéraire entre la borne fixe de guidage et la destination associée au code. L'invention ne concerne donc pas les bornes connues que l'on trouve typiquement dans les gares, ces bornes étant adaptées à délivrer des itinéraires vers des destinations pré-enregistrées dans la borne, chaque destination pouvant être sélectionnée par exemple grâce à un bouton.

Selon un deuxième aspect l'invention concerne un dispositif de détermination d'itinéraire d'un individu dans une zone prédéterminée, ce dispositif comportant :
- des moyens de détermination d'un itinéraire entre deux positions dans la zone prédéterminée; et
- des moyens de communication sans fil adaptés à :
   - recevoir une requête comportant un code associé à une destination et une indication de position mémorisée et émise par une borne fixe de guidage telle que mentionnée ci-dessus ; et à
   - envoyer une réponse comportant un itinéraire entre la borne fixe et la destination associée au code précité à destination de la borne fixe.

Préférentiellement, les moyens de communication sans fil du dispositif de détermination d'itinéraire selon l'invention sont des moyens de communication sans fil de consommation électrique réduite.

Selon un troisième aspect, l'invention concerne un système de guidage d'un individu dans une zone prédéterminée, ce système comportant au moins une borne fixe et un dispositif de détermination d'itinéraire tels que mentionnés ci-dessus.

L'installation du système de guidage selon l'invention est particulièrement aisée, puisqu'elle ne nécessite pas de phase de calibration étant donné que la position de l'individu au moment où il interroge le système de guidage correspond à la position de la borne fixe.

Ainsi, pour une installation dans un nouveau bâtiment, il suffit de repositionner les bornes fixes, et de modifier leurs positions dans le système de guidage.

II suffit en pratique de répertorier les positions de chacune des bornes fixes de guidage au moment de leurs installations, ce qui peut se faire de façon très simple même dans le cadre d'une installation temporaire.

Par exemple, chaque borne comporte des moyens pour mémoriser sa position, et l'indication de position envoyée au dispositif de détermination d'itinéraire correspond à cette position à proprement parler.

Préférentiellement, la position de chaque borne est enregistrée au niveau du dispositif de détermination d'itinéraire en association avec un identifiant unique de la borne, l'indication de position envoyée par la borne étant alors constituée par cet identifiant unique.

Dans un salon d'exposition, la position d'une borne peut par exemple être constituée par un étage, un numéro d'hall, un numéro d'allée et un numéro de rangée.

Conformément à l'invention, la borne de guidage et le dispositif de détermination d'itinéraire comportent des moyens de communication sans fil, et de consommation électrique réduite.

Dans ce document, on considèrera que des moyens de communication sont de consommation électrique réduite, si ils ont une consommation instantanée inférieure à 45 mW en fonctionnement. Ceci exclut en particulier l'utilisation de la technologie Wi-Fi dont les modules connus à ce jour présentent des consommations à peine inférieures à 1W en fonctionnement.

En outre, lorsque les moyens de communication sans fil de la borne de guidage sont inactifs, ils sont dans un mode de veille de consommation électrique pratiquement nulle, de l'ordre de quelques µW. Cette caractéristique n'est pas non plus réalisable avec des modules Wi-Fi qui nécessitent une liaison radio établie en permanence, si l'on souhaite éviter la dizaine de secondes nécessaires à son établissement à chaque interrogation.

Grâce à ces caractéristiques, la borne fixe de guidage peut être utilisée de façon autonome, à savoir sur batterie, pendant une dizaine de jours, ce qui est particulièrement appréciable pour une utilisation dans une installation temporaire.

Préférentiellement, les moyens de lecture de la borne de guidage comportent un module de type RFID (radio frequency identification) adapté à communiquer avec une étiquette électronique mémorisant le code associé à une destination.

Ce mode de réalisation préféré est d'utilisation très simple pour l'individu, qui a juste à présenter cette étiquette électronique, par exemple incorporée dans un badge, à proximité de la borne de guidage.

En variante, le code associé à une destination peut être saisi par l'utilisateur, au moyen d'un lecteur de code barre, d'un clavier, d'un écran tactile ou par tout autre type de moyens d'entrée.

Préférentiellement, le dispositif de détermination d'itinéraire selon l'invention comporte des moyens de mise en forme de la réponse en fonction des capacités des moyens de restitution et/ou de l'individu.

Ces moyens de mise en forme peuvent notamment calquer l'itinéraire sur un plan de la zone prédéterminée, pour faciliter la visualisation du trajet par l'individu.

En variante, la réponse peut être restituée par message vocal, notamment pour les individus mal voyants.

Dans un mode préféré de réalisation, le dispositif de détermination selon l'invention comporte :
- un module d'intermédiation incorporant les moyens de communication sans fil à consommation réduite; et
- un système central incorporant les moyens de détermination, le système central et le module d'intermédiation étant reliés entre eux par un réseau local.

Les moyens optionnels de mise en forme pouvant notamment être incorporés dans le module d'intermédiation ou dans le système central.

Préférentiellement, le réseau de proche en proche est un réseau en chaîne.

Une telle topologie est particulièrement simple d'installation, notamment dans une pièce où les différents modules de transmission peuvent être disposés le long du mur de proche en proche.

Ce mode préféré de réalisation permet ainsi de centraliser, dans le système central, les moyens de détermination sur un réseau distant, ce système central pouvant être partagé par différents systèmes de guidage indépendants, ou non, l'un de l'autre.

Préférentiellement, le système de guidage selon l'invention comporte en outre au moins un relais comportant des moyens de communication sans fil, de consommation électrique réduite, ces relais étant adaptés à transmettre de proche en proche, la requête et la réponse précitées entre la borne de guidage et le dispositif de détermination d'itinéraire.

Les relais constituent préférentiellement un réseau en chaîne.

On peut ainsi constituer un système de guidage dans lequel le dispositif de détermination d'itinéraire peut être hors de portée d'une borne de guidage.

Préférentiellement, des relais peuvent être constitués par des bornes de guidage au sens de l'invention.

Corrélativement, l'invention concerne un procédé de guidage d'un individu dans une zone prédéterminée, ce procédé comportant :
- une étape de lecture, par une borne de guidage telle que mentionnée ci-dessus, d'un code associé à une destination à laquelle souhaite se rendre cet individu ;
- une étape de transmission, par la borne, d'une requête comportant le code associé à une destination et une indication de position mémorisée par ladite borne vers un dispositif de détermination d'itinéraire tel que mentionné brièvement ci-dessus ;
- une étape de détermination, par ce dispositif de détermination, d'un itinéraire entre la position de la borne et la destination associée au code précité ;
- une étape d'envoi, par ce dispositif de détermination, et à destination de ladite borne, d'une réponse comportant l'itinéraire ; et
- une étape de restitution de l'itinéraire à l'individu.

En conséquence, l'invention vise aussi un programme d'ordinateur sur un support d'informations, ce programme étant susceptible d'être mis en oeuvre dans une borne de guidage selon l'invention, ce programme comportant des instructions adaptées à la mise en oeuvre des étapes suivantes :
- lecture d'un code associé à une destination ;
- transmission, vers un dispositif de détermination d'itinéraire, d'une requête comportant ce code associé à une destination et une indication de la position mémorisée par la borne ;
- réception, en provenance dudit dispositif de détermination, d'une réponse comportant un itinéraire entre la borne fixe et la destination associée au code précité ; et
- restitution de l'itinéraire à l'individu.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un module d'interaction, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Selon une implémentation préférée, les différentes étapes du procédé sont déterminées par des instructions de programmes d'ordinateurs.

Alternativement, le support d'informations peut être un circuit intégré dans lequel le programme est incorporé, le circuit étant adapté pour exécuter ou pour être utilisé dans l'exécution du procédé en question.

Les avantages particuliers du procédé de guidage, du programme d'ordinateur et du support d'informations, étant identiques à ceux de la borne de guidage, mentionnés précédemment, ils ne seront pas rappelés ici.

### Brève description des dessins

D'autres caractéristiques et avantages de la présente invention apparaîtront plus clairement à la lecture de la description des deux modes particuliers de réalisation qui vont suivre, cette description étant donnée uniquement à titre d'exemples non limitatifs et faite en référence aux dessins annexés sur lesquels
- la Figure 1 représente un système de guidage conforme à l'invention dans un premier mode de réalisation ;
- la Figure 2 représente un système de guidage conforme à l'invention dans un deuxième mode de réalisation ; et
- la Figure 3 représente sous forme d'organigramme les principales étapes d'un procédé de guidage conforme à l'invention dans un mode préféré de réalisation.

### Description détaillée d'un mode de réalisation

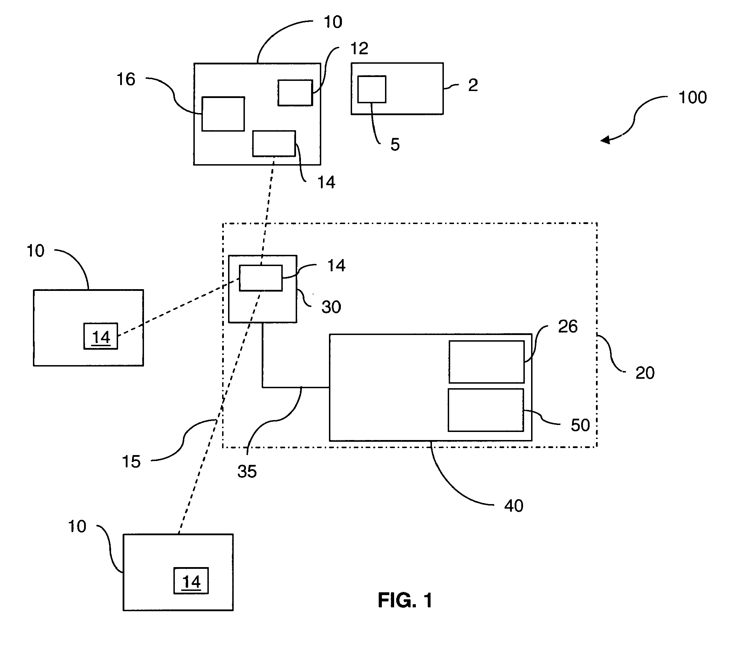

La **Figure 1** représente un système de guidage 100 conforme à l'invention dans un premier mode de réalisation.

Ce système de guidage peut être utilisé pour guider un individu dans une zone prédéterminée, constituée dans cet exemple par un bâtiment non représenté sur la figure.

On supposera par la suite que cet individu possède un badge 2, ce badge comportant une étiquette électronique 5 mémorisant un code associé à une destination à laquelle cet individu doit se rendre.

Ce badge 2 peut être un badge personnel ou un badge qui lui aurait été remis temporairement pour se déplacer dans le bâtiment.

Conformément à l'invention, le système 100 comporte une borne fixe de guidage 10 adaptée à délivrer des indications de guidage à l'individu pour se rendre à ladite destination.

Dans le mode de réalisation décrit ici, une indication de position de la borne fixe 10 a été préalablement configurée par un administrateur dans une mémoire, non représentée ici, de la borne 10.

Cette borne fixe 10 comporte des moyens 12 de lecture du code associé à une destination, ce code étant mémorisé dans l'étiquette électronique 5.

Dans le mode préféré de réalisation décrit ici, ces moyens de lecture mettent en oeuvre le protocole RFID (radio frequency identification) pour communiquer avec l'étiquette électronique 5.

Dans le mode préféré de réalisation décrit ici, on utilisera le lecteur de tag disponible auprès de la société TagProduct sous la référence LECT0025. Des informations complémentaires sur ce composant peuvent être obtenues à l'adresse suivante :
http://www.taciproduct.com/rfid/Materiels/doc/LECT0025.Pdf.

Ce composant consomme :
- 0,1A sous 3V lorsqu'il est actif ; et
- 0.03A sous 3V en mode veille.

La borne de guidage 10 comporte également des moyens 14 de communication sans fil avec un dispositif de détermination d'itinéraire 20.

Dans le mode de réalisation décrit ici, ce dispositif de détermination 20 est constitué par un dispositif de calcul d'itinéraire 20.

Ce dispositif de calcul d'itinéraire 20 est par exemple constitué par un serveur ou par un système informatique équivalent.

Conformément à l'invention, les moyens 14 de communication sans fil de la borne de guidage 10 et du dispositif de calcul d'itinéraire 20 sont des moyens de communication à faible consommation électrique.

Dans le mode préféré de réalisation décrit ici, ces moyens de communication sans fils sont mis en oeuvre par le composant disponible auprès de la société ATMEL sous la référence AT86RF210.

Ce composant présente un mode de veille dans lequel il consomme 1µA sous 3V et un mode opérationnel dans lequel il consomme, en émission et en réception 15mA sous 3V.

Ce composant est conforme au protocole Zigbee, bâti sur la norme de transmission IEEE 802.15.4, publiée notamment sur Internet à l'adresse :
http://standards.ieee.org/wireless/overview.html#802.15.

Pour plus de renseignements sur le protocole Zigbee, l'homme du métier pourra se reporter aux documents de référence du standard Zigbee, version V0.92, disponible auprès de l'Alliance Zigbee, sur le site Internet http://www.zigbee.org.

Quoi qu'il en soit, les moyens 14 de communication de la borne de guidage 10 sont adaptés à transmettre une requête au dispositif de calcul d'itinéraire 20, cette requête comportant le code associé à une destination reçu de l'étiquette électronique 5 et l'indication de position de la borne 10 mémorisée par cette borne.

Dans le mode de réalisation de la Figure 1, les trois bornes 10 d'interaction du système de guidage sont à portée du dispositif 20 de calcul d'itinéraire, définissant ainsi une topologie de réseau en étoile.

Dans le mode préféré de réalisation décrit ici, le dispositif 20 de calcul d'itinéraire comporte un module d'intermédiation 30 qui incorpore les moyens 14 de communication sans fil de consommation réduite précités, et un système central 40 incorporant des moyens 26 de calcul adaptés à déterminer un itinéraire entre deux adresses données au sein du bâtiment.

Le système central 40 est par exemple constitué par un serveur ou par un système informatique équivalent.

Dans le mode préféré de réalisation décrit ici, ces moyens 26 de calcul coopèrent, pour déterminer cet itinéraire, avec une base de données cartographiques 21.

Dans le mode préféré de réalisation décrit ici, les moyens 30 d'intermédiation et le système central 40 du dispositif 20 de calcul d'itinéraire sont reliés entre eux par un réseau local 35.

Dans un autre mode de réalisation non décrit ici, ces deux entités 30, 40 peuvent également être reliées par un réseau public 35 de type WAN (Wide Area Network).

Quoi qu'il en soit, ce lien réseau 35 est utilisé par les moyens 14 de communication du module de traitement pour transmettre la requête reçue de la borne de guidage 10 aux moyens 26 de calcul.

Sur réception de cette requête, les moyens 26 de calcul extraient la position de la borne 10 et la destination à laquelle doit se rendre l'individu pour déterminer un itinéraire au sein du bâtiment.

Les moyens 26 de calcul sont ensuite adaptés à transmettre, en utilisant les moyens 14 de communication sans fil, une réponse à destination de la borne de guidage 10, cette réponse comportant l'itinéraire obtenu précédemment.

Conformément à l'invention, la borne de guidage comporte également des moyens 16 de restitution de cet itinéraire à l'individu. Ces moyens de restitution peuvent être légèrement déportés mais préférentiellement situés à proximité du corps de la borne elle-même.

Ces moyens 16 de restitution peuvent par exemple être constitués par un écran du module 10 d'interaction ou par des moyens de synthèse vocale adaptés à restituer l'itinéraire.

Dans le mode de réalisation décrit ici, on utilise l'afficheur LCD commercialisé par la société Varitronix sous la référence MGLS 24064G-LED03.

Dans le mode préféré de réalisation décrit ici, en supposant qu'une borne de guidage est interrogée 30 fois par minute en moyenne, pendant dix heures par jour, la borne de guidage consomme entre 1,5 et 2 Watts par heures, toutes opérations confondues.

Cette borne de guidage peut donc fonctionner sur une batterie fonctionnant sous 6V à 10Ah pendant plusieurs jours.

Dans un mode préféré de réalisation, le système de guidage comporte également des moyens 50 de mise en forme de l'itinéraire en fonction des capacités des moyens 16 de restitution ou de l'individu à qui cet itinéraire est destiné. La synthèse vocale sera par exemple privilégiée pour faciliter le guidage d'individus mal voyants.

Dans le mode de réalisation représenté à la Figure 1, ces moyens 50 de mise en forme sont incorporés dans le système central 40.

Ce mode de réalisation est nullement limitatif, les moyens 50 de mise en forme pouvant être incorporés dans les moyens 30 d'intermédiation ou dans la borne de guidage 10.

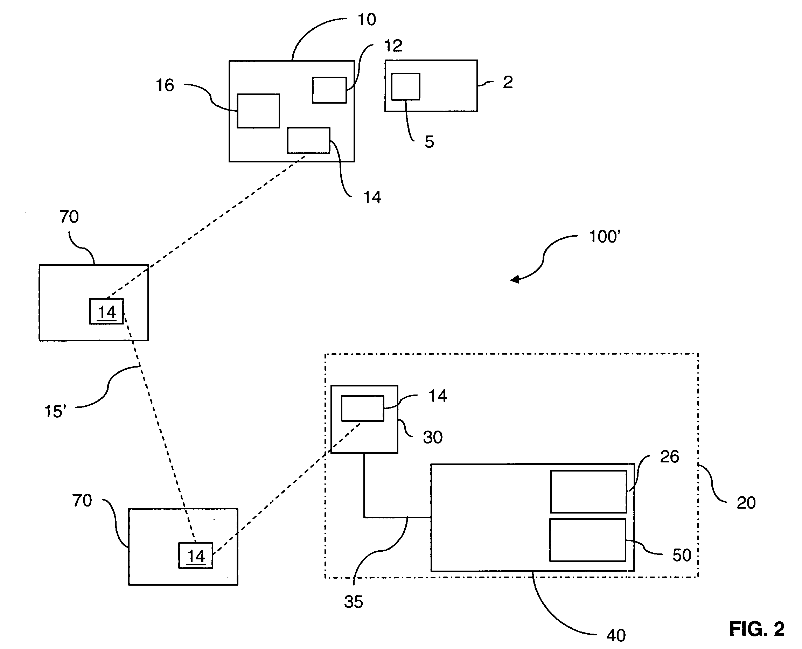

Nous allons maintenant décrire, en référence à la **Figure 2**, un système de guidage 100' conforme à l'invention dans un deuxième mode de réalisation.

Ce système 100' de guidage utilise des relais 70 pour relayer la requête et la réponse entre la borne de guidage 10 d'interaction et le module 20 de traitement lorsque ces deux équipements sont hors de portée l'un de l'autre, typiquement séparés de plus de trente mètres.

Dans ce mode de réalisation, le réseau 15' constitué par la borne fixe 10, les différents relais 70, le dispositif de calcul d'itinéraire 20 est un réseau en chaîne (daisy chain). Dans une variante non représentée ici, ces équipements peuvent être agencés de façon à constituer un réseau maillé.

Ces relais 70 comportent des moyens de communication 14 similaires à ceux de la borne 10 du dispositif de calcul 20.

Dans une variante de réalisation, les modules 70 de transmission sont aussi des bornes 10 de guidage.

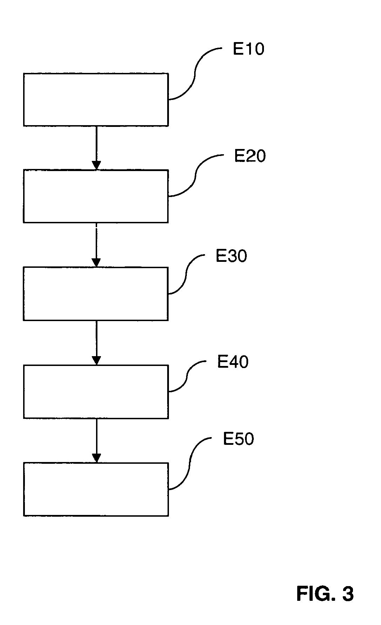

La **Figure 3** représente sous forme d'organigramme les principales étapes d'un procédé de guidage conforme à l'invention dans un mode préféré de réalisation.

Ce procédé de guidage comporte une première étape E10 de lecture d'un code associé à une destination par la borne de guidage 10.

Comme décrit précédemment, cette étape de lecture peut être effectuée par des moyens 12 de lecture RFID d'une étiquette électronique 5 incorporée dans un badge 2 de l'individu.

L'étape E10 de lecture est suivie par une première étape E20 de transmission par la borne 10 d'une requête comportant le code associé à une destination et une indication de position de cette borne 10 vers le dispositif de calcul d'itinéraire 20.

Cette première étape E20 de transmission est suivie par une étape E30 de calcul par le dispositif de calcul d'itinéraire 20 d'un itinéraire entre la position de la borne 10 et la destination lue à partir de l'étiquette électronique 5.

Cette étape E30 de calcul est suivie par une deuxième étape de transmission au cours de laquelle le dispositif de calcul d'itinéraire 20 communique à la borne 10 cet itinéraire en réponse à la requête précitée.

Cette deuxième étape E40 de transmission est suivie par une étape E50 au cours de laquelle la borne 10 restitue l'itinéraire à l'individu.

Conformément à l'invention, les première E20 et deuxième E40 étapes de transmission utilisent des moyens de communication sans fil à consommation électrique réduite adaptés le cas échéant à transmettre la requête et la réponse de proche en proche via un réseau relais 70 comportant des moyens de communication similaires.

L'invention trouve une application particulière dans le domaine de la logistique. Dans cette application, des étiquettes électroniques présentes sur de la marchandise, par exemple des bouteilles de gaz, contiennent une information sur la destination à laquelle doit être stockée cette marchandise.

Le manutentionnaire peut ainsi approcher cette étiquette électronique d'une borne fixe à l'entrée d'un entrepôt, cette borne fixe étant ainsi adaptée à lui fournir un itinéraire jusqu'au lieu de stockage approprié pour ce type de marchandise.

L'information de destination mémorisée dans l'étiquette électronique peut contenir une indication du type de marchandise à stocker (nature du gaz inflammable ou non), information à partir de laquelle le dispositif de détermination d'itinéraire sera capable de déterminer une destination, par exemple par lecture d'une table mémorisant les codes en association avec un lieu de stockage.

Grâce à l'invention, l'itinéraire proposé par la borne de guidage pourra être un itinéraire permettant au manutentionnaire d'éviter les zones de passage dangereuses en fonction du type de marchandise.

## Revendications

1. Borne fixe de guidage (10) d'un individu dans une zone prédéterminée comportant une mémoire mémorisant une indication de position de ladite borne fixe (10), et :
- des moyens (12) de lecture d'un code associé à une destination (Dest) à laquelle souhaite se rendre un individu situé à proximité de ladite borne ;
- des moyens (14) de communication sans fil pour :
- envoyer une requête comportant ledit code associé à une destination (Dest) et ladite indication (ID10, Pos10) de position de ladite borne vers un dispositif (20) de détermination d'itinéraire ; et à
- recevoir une réponse comportant un itinéraire entre ladite borne (10) et la destination associée audit code (Dest) ; et
- des moyens (16) de restitution dudit itinéraire à l'individu.

2. Borne fixe (10) selon la revendication 1, **caractérisée en ce que** lesdits moyens (14) de communication sans fil comportent un mode de veille et un mode opérationnel à consommation électrique réduite.

3. Borne fixe (10) selon la revendication 1 ou 2, **caractérisée en ce que** lesdits moyens (12) de lecture comportent un module de type RFID adapté à communiquer avec une étiquette électronique (5) mémorisant ledit code associé à une destination (Dest).

4. Dispositif de détermination d'itinéraire (20) d'un individu dans une zone prédéterminée comportant :
- des moyens (26) de détermination d'un itinéraire entre deux positions (Pos10, Dest) dans ladite zone prédéterminée; et
- des moyens (14) de communication sans fil adaptés à :
- recevoir une requête comportant un code associé à une destination (Dest) et une indication (ID10, Pos10) de position mémorisée et émise par une borne fixe de guidage (10) conforme à l'une quelconque des revendications 1 à 3 ; et à
- envoyer une réponse comportant un itinéraire entre ladite borne (10) et la destination associée audit code (Dest) à destination de ladite borne fixe (10).

5. Dispositif de détermination d'itinéraire (20) selon la revendication 4, **caractérisé en ce que** lesdits moyens (14) de communication sans fil sont des moyens à consommation électrique réduite.

6. Dispositif de détermination d'itinéraire (20) selon la revendication 4 ou 5, **caractérisé en ce qu'**il comporte des moyens (50) de mise en forme de ladite réponse en fonction des capacités desdits moyens (16) de restitution et/ou dudit individu.

7. Dispositif de détermination selon l'une quelconque des revendications 4 à 6, **caractérisé en ce qu'**il comporte :
- un module (30) d'intermédiation incorporant lesdits moyens (14) de communication; et
- un système central (40) incorporant lesdits moyens (26) de détermination, le système central (40) et le module (30) d'intermédiation étant reliés entre eux par un réseau local (35), lesdits moyens (50) optionnels de mise en forme pouvant notamment être incorporés dans le module (30) d'intermédiation ou dans le système central (40).

8. Système de guidage d'un individu dans une zone prédéterminée **caractérisé en ce qu'**il comporte au moins :
- une borne fixe de guidage selon l'une quelconque des revendications 1 à 3 ; et
- un dispositif de détermination d'itinéraire selon l'une quelconque des revendications 4 à 7.

9. Système de guidage selon la revendication 8, **caractérisé en ce qu'**il comporte en outre au moins un relais (70) comportant des moyens (14) de communication sans fil, de consommation électrique réduite, lesdits relais étant adaptés à transmettre de proche en proche, ladite requête et ladite réponse entre ladite borne de guidage (10) et le dispositif (20) de détermination d'itinéraire.

10. Système de guidage selon la revendication 8, **caractérisé en ce que** lesdits relais (70) constituent un réseau (15') en chaîne.

11. Système de guidage selon la revendication 9 ou 10, **caractérisé en ce que** au moins un relais est constitué par une borne de guidage selon l'une quelconque des revendications 1 à 3.

12. Procédé de guidage d'un individu dans une zone prédéterminée, ce procédé comportant :
- une étape (E10) de lecture, par une borne (10) de guidage conforme à l'une quelconque des revendications 1 à 3, d'un code associé à une destination (Dest) à laquelle souhaite se rendre ledit individu ;
- une étape (E20) de transmission, par ladite borne de guidage (10), d'une requête comportant ledit code associé à une destination (Dest) et une indication de position (Pos10, Id10) mémorisée par ladite borne (10) vers un dispositif de détermination d'itinéraire (20) selon l'une quelconque des revendications 4 à 7 ;
- une étape (E30) de détermination, par ledit dispositif de détermination (20), d'un itinéraire entre ladite position (Pos10) et la destination associée audit code (Dest) ;
- une étape (E40) d'envoi, par ledit dispositif de détermination (20), et à destination de ladite borne (10), d'une réponse comportant ledit itinéraire ; et
- une étape (E50) de restitution de l'itinéraire à l'individu.

13. Programme d'ordinateur sur un support d'informations, ledit programme étant susceptible d'être mis en oeuvre dans une borne fixe (10) de guidage selon l'une quelconque des revendications 1 à 3, ce programme comportant des instructions adaptées à la mise en oeuvre des étapes suivantes :
- lecture (E10) d'un code associé à une destination (Dest);
- transmission (E20), vers un dispositif (20) de détermination d'itinéraire, d'une requête comportant ledit code associé à une destination (Dest) et une indication (ID10, Pos10) de position mémorisée par ladite borne (10) ;
- réception, en provenance dudit dispositif (20) de détermination, d'une réponse comportant un itinéraire entre ladite borne (10) et la destination associée audit code (Dest) ; et
- restitution (E50) de l'itinéraire à l'individu.

14. Support d'informations lisible par une borne fixe (10) de guidage selon l'une quelconque des revendications 1 à 3, **caractérisé en ce qu'**il comporte des instructions d'un programme d'ordinateur selon la revendication 13.
